# EUROPÄISCHE PATENTSCHRIFT

(11) **EP 3 960 542 B1**
(45) Veröffentlichungstag und Bekanntmachung des Hinweises auf die Patenterteilung: **28.12.2022**
(21) Anmeldenummer: 21192900.5
(22) Anmeldetag: 24.08.2021
(51) Int. Cl.: B60Q 1/068, B60Q 1/06

(54) **KRAFTFAHRZEUGSCHEINWERFER MIT EINEM TEMPERATURABHÄNGIG SEINE FORM ÄNDERNDEN STELLELEMENT**
MOTOR VEHICLE HEADLAMP WITH ADJUSTING ELEMENT CHANGING ITS SHAPE DEPENDENT ON TEMPERATURE
PHARES DE VÉHICULE AUTOMOBILE DOTÉ D'UN ÉLÉMENT DE RÉGLAGE CHANGEANT SA FORME EN FONCTION DE LA TEMPÉRATURE

(30) Priorität: 26.08.2020 DE 102020122354
(43) Veröffentlichungstag der Anmeldung: 02.03.2022
(73) Patentinhaber: Marelli Automotive Lighting Reutlingen (Germany) GmbH, 72762 Reutlingen (DE)
(72) Erfinder: Stang, Andreas, 72762 Reutlingen (DE); Leittretter, Andreas, 73770 Denkendorf (DE)
(74) Vertreter: DREISS Patentanwälte PartG mbB

(56) Entgegenhaltungen:
- EP-A1- 3 569 924
- DE-A1-102010 009 283
- DE-A1-102012 111 311
- DE-A1-102018 101 983
- US-A1- 2012 320 619

## Beschreibung

Die vorliegende Erfindung betrifft einen Kraftfahrzeugscheinwerfer mit einem Gehäuse, einem in dem Gehäuse schwenkbar angeordneten Lichtmodul, wobei das Lichtmodul und das Gehäuse Teile einer geschlossenen kinematischen Kette sind, welche die Schwenkposition determiniert, wobei ein temperaturabhängig seine Form änderndes Stellelement in der kinematischen Kette so angeordnet ist, dass es in der kinematischen Kette eine temperaturabhängige Stellbewegung ausführt, die eine temperaturabhängige Längenänderung der übrigen kinematischen Kette zumindest zu einem Teil kompensiert.

Ein solcher Kraftfahrzeugscheinwerfer ist aus der DE 10 2012 111 311 A1 bekannt. Der bekannte Kraftfahrzeugscheinwerfer weist eine Einstellschraube auf, die zusammen mit einem mit der Einstellschraube zusammenwirkenden Gewindeteil eine Stellgewindeverbindung bildet. Das Gewindeteil ist mit einem Verbindungsglied gekoppelt und ist zusammen mit dem Verbindungsglied in die kinematische Kette integriert.

Das Verbindungsglied weist zwei voneinander beabstandete Bereiche auf, von denen ein erster Bereich in einem ersten Abschnitt der kinematischen Kette fest gehalten wird und von denen ein zweiter Bereich in einem zweiten Abschnitt der kinematischen Kette festgehalten wird. Die Verbindung beider Abschnitte ist parallel zu der Stellbewegung angeordnet, die das Verbindungsglied bei einer Temperaturänderung erzeugt. Deshalb braucht eine Längenänderung eine ausreichend große Basislänge des Verbindungsgliedes und einen entsprechend großen Bauraum.

Der erfindungsgemäße Kraftfahrzeugscheinwerfer zeichnet sich demgegenüber dadurch aus, dass das temperaturabhängig seine Form ändernde Stellelement ein Metallverbundstreifen aus zwei oder mehr Lagen Metall mit unterschiedlichen Temperaturausdehnungskoeffizienten ist, der quer zu der Stellbewegung angeordnet ist und der wenigstens zwei quer zu der Stellbewegung voneinander beabstandete Bereiche aufweist, von denen ein erster Bereich in einem gehäuseseitigen Abschnitt der kinematischen Kette fest gehalten wird und von denen wenigstens ein zweiter Bereich in einem lichtmodulseitigen Abschnitt der kinematischen Kette festgehalten wird.

Durch diese Merkmale wird der zur Erzeugung der kompensierenden Stellbewegung erforderliche Bauraum vorteilhafterweise verkleinert.

Die Kompensation kann sowohl passiv als auch aktiv gesteuert erfolgen. Bei der passiven Kompensation wird die intrinsische thermisch induzierte Formänderung ausgenutzt, die sich durch Temperaturänderungen der Umgebung ergibt. Bei einer aktiven Kompensation wird die Temperatur des temperaturabhängig seine Form ändernden Stellelements durch Beheizung aktiv beeinflusst.

Bei der passiven Lösung kann es sich um einen zweilagigen Metallstreifen aus zwei Metallen mit unterschiedlichen Temperaturausdehnungskoeffizienten handeln. Ein derartiger Metallverbund wird auch als Bimetall bezeichnet.

Bei der aktiven Lösung wird die Temperatur des Metallverbundes durch aktive Heizung gesteuert. Die Heizung erfolgt bevorzugt elektrisch. Dabei kann der Metallverbund selbst als Heizleiter verwendet werden. Alternativ oder ergänzend kann der Metallverbund einen zusätzlichen Heizleiter aufweisen. Der Heizleiter kann eine zusätzliche Kupferschicht sein, die bevorzugt zwischen weiteren Metalllagen des Metallverbundes angeordnet ist. Ein solcher Metallverbund wird auch als Trimetall bezeichnet. Durch einen elektrischen Strom, der durch den Heizleiter fließt, kann die Auslenkung des Metallverbundstreifens bei steigender Umgebungstemperatur verstärkt und bei fallender Umgebungstemperatur gedämpft werden.

Nachfolgend wird das temperaturabhängig seine Form ändernde Stellelement als Metallverbundstreifen bezeichnet.

Eine bevorzugte Ausgestaltung zeichnet sich dadurch aus, dass die kinematische Kette das Lichtmodul, ein Gelenk, ein zwischen dem Gelenk und einem Fixpunkt des Gehäuses liegenden Gehäuseabschnitt, eine Gewindestange, ein auf der Gewindestange um deren Achse herum drehbares und mit der Drehung längs der Achse translatorisch verschiebbares Gewindeelement, den Metallverbundstreifen, einen im Gehäuse translatorisch verschiebbaren Verstellschlitten und ein Koppelgestänge aufweist.

Bevorzugt ist auch, dass der Fixpunkt durch einen Teil des Gehäuses oder durch eine starr mit dem Gehäuse verbundene Struktur gebildet ist.

Weiter ist bevorzugt, dass der Verstellschlitten im Gehäuse translatorisch beweglich gelagert ist.

Eine weitere bevorzugte Ausgestaltung zeichnet sich dadurch aus, dass der Verstellschlitten eine Lichtmodulanbindungsstruktur aufweist und dass das Koppelgestänge mit einem Ende an das Lichtmodul und mit einem anderen Ende an die Lichtmodulanbindungsstruktur beweglich angekoppelt ist.

Bevorzugt ist auch, dass der Metallverbundstreifen eine Länge, eine Breite und eine Dicke auf, wobei die Länge insbesondere größer als die Dicke (Materialstärke) ist.

Weiter ist bevorzugt, dass die Länge 15 mm bis 25 mm bei einer Dicke von 0,6 mm bis 1 mm beträgt.

Eine weitere bevorzugte Ausgestaltung zeichnet sich dadurch aus, dass der Metallverbundstreifen mit seiner Länge quer zu der Stellbewegung des Gewindeelements angeordnet ist und zwei in seiner Längsrichtung einander gegenüberliegende zweite Bereiche aufweist, die quer zu der Gewindestange über das Gewindeelement hinausragen.

Bevorzugt ist auch, dass ein zwischen den beiden zweiten Bereichen liegender erster Bereich des Metallverbundstreifens zur Koppelung des Metallverbundstreifens mit dem Gewindeelement eingerichtet ist.

Weiter ist bevorzugt, dass das Gewindeelement eine Nut aufweist, in die der erste Bereich des Metallverbundstreifens eingelegt ist, und welche Nut quer zu der Richtung der Längserstreckung der Gewindestange verläuft.

Eine weitere bevorzugte Ausgestaltung zeichnet sich dadurch aus, dass die einander gegenüberliegenden zweiten Bereiche an dem Verstellschlitten befestigt sind und dass der Verstellschlitten dazu Aufnahmen aufweist, die durch ihre Form, Größe und Anordnung dazu eingerichtet sind, die zweiten Bereiche des Metallverbundstreifens formschlüssig aufzunehmen.

Bevorzugt ist auch, dass die beiden einander gegenüberliegenden zweiten Bereiche des Metallverbundstreifens in die gleiche Richtung umgebogen sind.

Weiter ist bevorzugt, dass ein zwischen den beiden zweiten Bereichen liegender erster Bereich des Metallverbundstreifens zur Koppelung des Metallverbundstreifens mit dem Gewindeelement dient und dass die einander gegenüberliegenden zweiten Bereiche an dem Verstellschlitten befestigt sind.

Bevorzugt ist auch, dass das Gewindeelement einen Gewindeabschnitt aufweist, der eine halboffene Gewindeschale aufweist, dass das Innengewinde der halboffenen Gewindeschale durch seine Größe und Form dazu eingerichtet, mit dem Außengewinde der Gewindestange zusammenzuwirken, so dass eine Drehbewegung der Gewindestange zu einer Translationsbewegung des Gewindeelements führt, dass die Gewindeachsen von Gewindestange und Gewindeschale zusammenfallen, und dass die Gewindeschale halbseitig offen ist, so dass die beiden Teile beim Zusammenbau in radialer Richtung zusammengeführt werden können.

Weiter ist bevorzugt, dass das Gewindeelement Gleitflächen aufweist, die sich parallel zur Längserstreckung der Gewindestange erstrecken. Der Verstellschlitten weist Führungsflächen auf, die im zusammengebauten Zustand parallel zu den Gleitflächen liegen und zusammen mit den Gleitflächen ein Translationsgleitlager bilden, das eine Verschiebung von Gewindeelement und Verstellschlitten relativ zueinander führt und lagert.

Eine weitere bevorzugte Ausgestaltung zeichnet sich dadurch aus, dass eine U-förmige Überdrehschutzfeder im zusammengebauten Zustand in der in Bezug auf die Drehachse der Gewindestange radialen Richtung die Gewindestange und das Gewindeelement umfasst und in eine Haltestruktur des Verstellschlittens eingerastet ist. Dabei befindet sich das Gewindeelement in radialer Richtung zwischen der Gewindestange und dem Verstellschlitten, und die Gewindestange befindet sich zwischen einem geschlossenen Ende der U-förmigen Überdrehschutzfeder und dem Gewindeelement. Ein offenes Ende der U-förmigen Überdrehschutzfeder ist mit dem Verstellschlitten verrastet.

Bevorzugt ist auch, dass das Gewindeelement dazu eine Nut aufweist, in die der erste Bereich des Metallverbundstreifens eingelegt wird. Die Nut verläuft quer zu der Richtung der Längserstreckung der Gewindestange. Die einander gegenüberliegenden zweiten Bereiche sind an dem Verstellschlitten befestigt.

Weiter ist bevorzugt, dass der Verstellschlitten dazu Aufnahmen aufweist, die durch ihre Form, Größe und Anordnung dazu eingerichtet sind, die zweiten Bereiche des Metallverbundstreifens aufzunehmen.

Bevorzugt ist auch, dass die Aufnahmen in dem Verstellschlitten so ausgeführt sind, dass sie eine Montage des Metallverbundstreifens in zwei Anordnungen erlauben, wobei sich die erste Anordnung dadurch auszeichnet, dass die zweiten Bereiche des Metallverbundstreifens in eine erste Richtung weisen, und dass sich die zweite Anordnung dadurch auszeichnet, dass die zweiten Bereiche des Metallverbundstreifens in eine zur ersten Richtung entgegengesetzte zweite Richtung zeigen.

Eine weitere bevorzugte Ausgestaltung zeichnet sich dadurch aus, dass der Metallverbundstreifen elektrisch beheizbar ist.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung gemäß den beiliegenden Ansprüchen verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Dabei bezeichnen gleiche Bezugszeichen in verschiedenen Figuren jeweils gleiche oder zumindest ihrer Funktion nach vergleichbare Elemente. Es zeigen, jeweils in schematischer Form:
- Figur 1: ein Ausführungsbeispiel eines erfindungsgemäßen Kraftfahrzeugscheinwerfers;
- Figur 2: verschiedene Bauelemente in einem zerlegten Zustand eines erfindungsgemäßen Kraftfahrzeugscheinwerfers;
- Figur 3: die Bauelemente aus der Figur 2 in einem zusammengefügten Zustand; und
- Figur 4: ein weiteres Ausführungsbeispiel eines erfindungsgemäßen Kraftfahrzeugscheinwerfers.

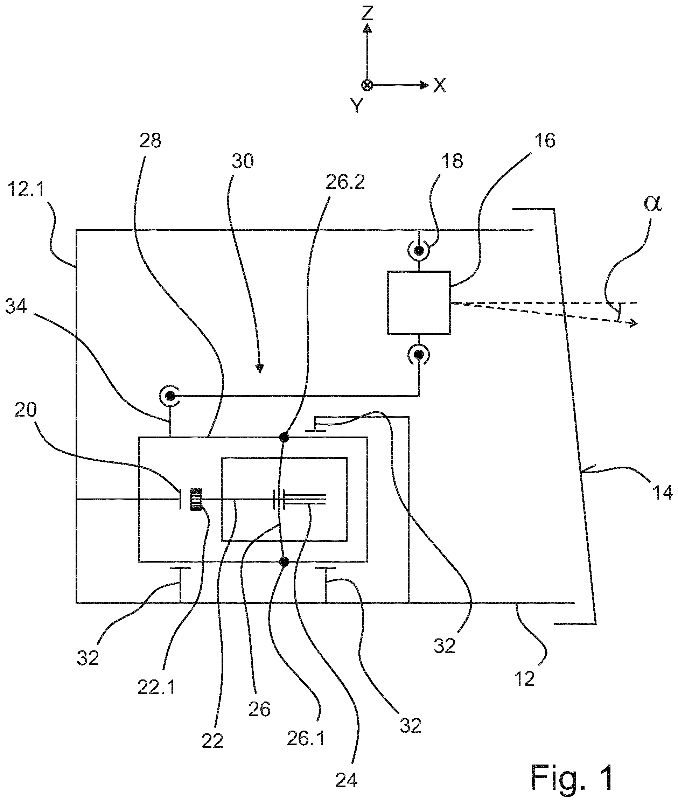

Im Einzelnen zeigt die Figur 1 einen Schnitt durch einen Kraftfahrzeugscheinwerfer 10. Bei einer Orientierung des Kraftfahrzeugscheinwerfers 10 im Raum, die seiner Orientierung bei bestimmungsgemäßer Verwendung im Kraftfahrzeug entspricht, liegt die Schnittfläche parallel zu einer Ebene, die von einer in x-Richtung verlaufenden Längsachse und einer in z-Richtung verlaufenden Hochachse des Kraftfahrzeugs aufgespannt wird. Die y-Richtung verläuft dabei parallel zu einer Querachse des Kraftfahrzeugs. Der Kraftfahrzeugscheinwerfer 10 weist ein Gehäuse 12 auf, dessen Lichtaustrittsöffnung von einer transparenten Abdeckscheibe 14 abgedeckt wird. Im Gehäuse ist ein Lichtmodul 16 mit einem Gelenk 18 um eine zur y-Richtung parallele Schwenkachse schwenkbar angeordnet.

Das Lichtmodul 16 ist dazu eingerichtet, eine Abblendlichtverteilung abzustrahlen. Eine Abblendlichtverteilung zeichnet sich dadurch aus, dass sie eine Hell-Dunkel-Grenze aufweist, die wenigstens zu einem Teil ihrer Länge quer zur Längsachse des Kraftfahrzeuges und damit quer zur x-Richtung verläuft. Die Hell-Dunkel-Grenze soll einerseits möglichst hoch liegen (in z-Richtung), um eine große Reichweite der Abblendlichtverteilung zu erzielen. Andererseits darf sie nur so hoch liegen, dass andere Verkehrsteilnehmer nicht geblendet werden.

Bei dem dargestellten Kraftfahrzeugscheinwerfer 10 wird die Höhe der Hell-Dunkel-Grenze durch den in der x-z-Ebene liegenden Winkel ∝ zwischen einer Abstrahlrichtung des Lichtmoduls 16 und der x-Richtung bestimmt oder zumindest beeinflusst.

Die Schwenkstellung wird durch die Lage der Schwenkachse im Kraftfahrzeug und zusätzlich durch eine kinematische Kette bestimmt, die sich zwischen dem Lichtmodul 16 und einem Fixpunkt 20 der kinematischen Kette des Kraftfahrzeugscheinwerfers erstreckt.

Im Ausführungsbeispiel der Figur 1 besteht die kinematische Kette aus dem Lichtmodul 16, dem Gelenk 18, einem zwischen dem Gelenk 18 und dem Fixpunkt 20 des Gehäuses 12 liegenden Gehäuseabschnitt 12.1, einer Gewindestange 22, einem auf der Gewindestange 22 um deren Gewindeachse herum drehbaren und mit der Drehung längs der Gewindeachse translatorisch verschiebbaren Gewindeelement 24, dem Metallverbundstreifen 26 als einem temperaturabhängig seine Form ändernden Stellelement, einem im Gehäuse 12 translatorisch verschiebbaren Verstellschlitten 28 und einem Koppelgestänge 30. Der Fixpunkt 20 kann durch einen Teil des Gehäuses 12 oder durch eine starr mit dem Gehäuse 12 verbundene Struktur gebildet sein. Der Verstellschlitten 28 ist im Gehäuse 12 in Führungstrukturen 32 translatorisch beweglich gelagert.

Das Gelenk 18 weist einen mit dem Lichtmodul 16 starr verbundenen ersten Teil und einen mit dem Gehäuseabschnitt 12.1 starr verbundenen zweiten Teil auf. Der erste Teil und der zweite Teil bilden zusammen zum Beispiel eine spielfreie Kugelkopfverbindung, die insbesondere eine Schwenkung des Lichtmoduls 16 in der x-z-Ebene erlaubt.

Die Gewindestange 22 stützt sich an dem Fixpunkt 20 des Gehäuses 12 ab. Bevorzugt erfolgt die Abstützung an einem Ende der Gewindestange 22. Die Gewindestange 22 weist in einer bevorzugten Ausgestaltung ein Zahnrad 22.1 auf, das starr oder zumindest drehfest mit der Gewindestange 22 verbunden ist und dessen Drehachse mit der Drehachse der Gewindestange 22 zusammenfällt. Das Zahnrad 22.1 ist damit mit der Gewindestange 22 so verbunden, dass eine Drehung des Zahnrades 22.1 eine Drehung der Gewindestange 22 um ihre Längsachse, bzw. Gewindeachse herum antreibt. Die Drehung der Gewindestange 22 überträgt sich in eine translatorische Bewegung des Gewindeelements 24 längs der Gewindeachse der Gewindestange 22. Je nach Drehrichtung entfernt sich das Gewindeelement 24 damit von dem Fixpunkt 20, oder es rückt näher an den Fixpunkt 20 heran. Alternative Ausgestaltungen sehen an Stelle des Zahnrades 22.1 einen anderen Drehantrieb vor, bspw. einen Schrittmotor oder eine Drehwerkzeugaufnahme wie einen Sechskant oder einen Schlitz.

Die Vergrößerung der Entfernung des Gewindeelements 24 von dem Fixpunkt 20 vergrößert die Länge der kinematischen Kette, und die Annäherung des Gewindeelements 24 an den Fixpunkt 20 verringert die Länge der kinematischen Kette.

An dem Gewindeelement 24 ist der Metallverbundstreifen 26 befestigt. Die Befestigung erfolgt bevorzugt durch einen Formschluss so, dass sich eine translatorische Bewegung des Gewindeelements 24 in eine gleich große translatorische Bewegung des Metallverbundstreifens 26 überträgt. Der Metallverbundstreifen 26 ist mit seiner Länge quer zu der Stellbewegung des Gewindeelements 24 angeordnet und weist zwei in seiner Längsrichtung einander gegenüberliegende zweite Bereiche 26,1, 26.2 auf, die quer zu der Gewindestange 22 über das Gewindeelement 24 hinausragen. Ein zwischen den beiden zweiten Bereichen 26.1, 26.2 liegender erster Bereich 26.3 des Metallverbundstreifens 26 dient zur Koppelung des Metallverbundstreifens mit dem Gewindeelement 24. Die einander gegenüberliegenden zweiten Bereiche 26.1, 26.2 sind an dem Verstellschlitten 28 befestigt. Als Folge ist der Verstellschlitten 28 translatorisch in Richtung der Stellbewegung, die in der Figur 1 entlang der x-Achse erfolgt, über den Metallverbundstreifen mit dem Gewindeelement 24 gekoppelt, so dass sich eine translatorische Bewegung des Gewindeelements 24 über den Metallverbundstreifen 26 in eine translatorische Bewegung des Verstellschlittens 28 überträgt. Die aufeinander bezogenen Positionen von Verstellschlitten 28 und Gewindeelement 24 ändern sich dabei nicht, solange keine Temperaturänderungen auftreten.

Der Verstellschlitten 28 ist durch Führungsstrukturen 32 wie ineinander greifende Schienen, die eine translatorische Bewegung des Verstellschlittens 28 relativ zu dem Gehäuse erlauben und führen, im Gehäuse 12 gelagert. Der Verstellschlitten 28 weist eine Lichtmodulanbindungsstruktur 28 auf. Das Koppelgestänge 30 ist mit einem Ende an das Lichtmodul 16 und mit einem anderen Ende an die Lichtmodulanbindungsstruktur 34 beweglich angekoppelt. Die Ankopplung ist so ausgeführt, dass eine Veränderung der Lage des Verstellschlittens 28 im Gehäuse 12 zu einer Veränderung der Schwenkstellung des Lichtmoduls 16 führt.

Die Länge der kinematischen Kette beeinflusst die Schwenkstellung des Lichtmoduls 16 und damit auch die Lage einer Hell-Dunkel-Grenze und einer Reichweite der von dem Lichtmodul 16, bzw. von dem Kraftfahrzeugscheinwerfer 10 abgestrahlten Lichtverteilung.

Im Prinzip treten bei allen Gliedern der kinematischen Kette bei Temperaturänderungen auch thermisch induzierte Längenänderungen auf. Je nachdem, welche Richtung dabei überwiegt, kann sich die Hell-Dunkel Grenze dabei nach oben oder nach unten verschieben, was beides unerwünscht ist.

Der temperaturabhängig seine Form ändernde Metallverbundstreifen 26 ist so konzipiert, dass sich seine Längenänderung gegenläufig kompensierend zu der Längenänderung der übrigen kinematischen Kette auswirkt. Wenn die Längenänderung der übrigen kinematischen Kette zu einer Verschiebung der Hell-Dunkel-Grenze nach unten (alternativ: nach oben) führt, wird der temperaturabhängig seine Form ändernde Metallverbundstreifen 26 so konzipiert, dass seine eigene Formänderung zu einer Verschiebung der Hell-Dunkel-Grenze nach oben (in Fall der Alternative: nach unten) führt.

Dabei hat sich gezeigt, dass bei einer Dicke des mit seiner Längsrichtung erfindungsgemäß quer zur Stellbewegung angeordneten Metallverbundstreifens 26 von 0,8 mm und einer wirksamen Länge des Metallverbundstreifens 26 von 19,8 mm gezielte Längenänderungen der kinematischen Kette von 0,2 mm bei einer Temperaturänderung von -40°C bis +80°C erreicht werden.

Wenn das sich thermisch längenändernde Element dagegen anders als bei der vorliegenden Erfindung nicht quer, sondern parallel zu der Stellbewegung angeordnet ist, ist bei einem für Kunststoffe typischen Wärmeausdehnungskoeffizienten von 0,1 Millimeter pro Meter und pro Kelvin und gleicher Temperaturänderung von 120 K eine Basislänge von ca. 17 mm erforderlich, um eine Längenänderung von 0,2 mm zu erzeugen, was bei knappem Einbauraum nachteilig ist.

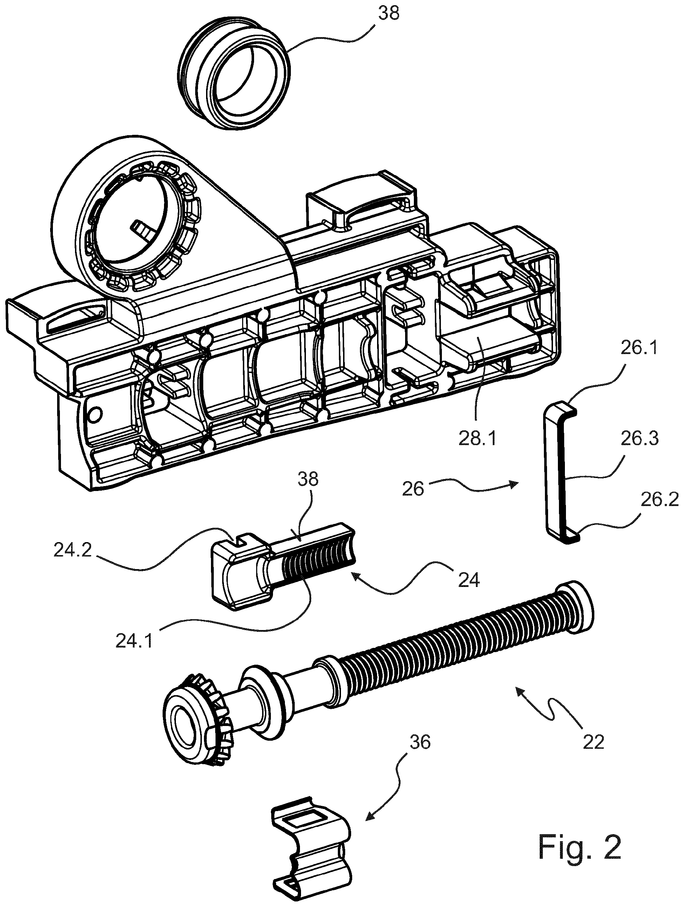

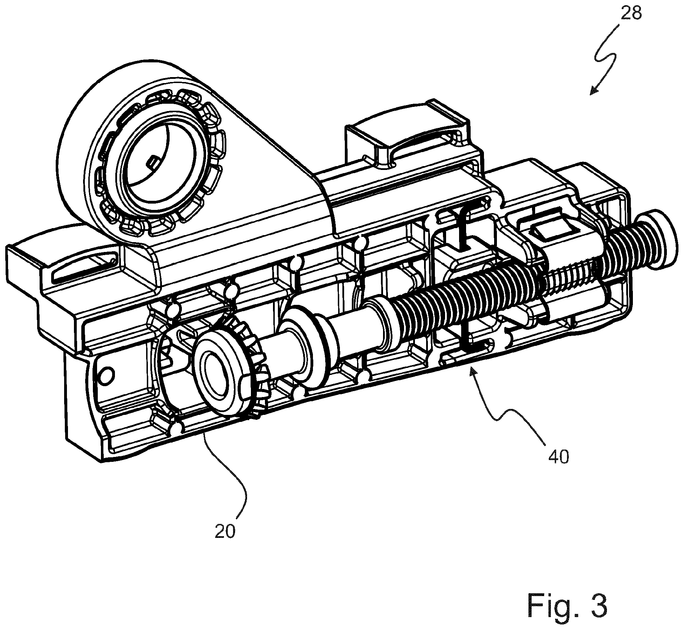

Figur 2 zeigt für ein Ausführungsbeispiel die Gewindestange 22 zusammen mit dem Gewindeelement 24, einem Metallverbundstreifen 26, eine Überdrehschutzfeder 36, dem Verstellschlitten 28 und einer zur Toleranzkompensation dienenden Silikonbuchse 38, mit der das Koppelgestänge 30 mit dem Verstellschlitten 28 verbindbar ist, im zerlegten Zustand. Figur 3 zeigt diese Bauteile in einem zusammengefügten Zustand.

Das Gewindeelement 24 weist einen Gewindeabschnitt 24.1 auf, der eine halboffene Gewindeschale aufweist. Das Innengewinde der halboffenen Gewindeschale ist durch seine Größe und Form dazu eingerichtet, mit dem Außengewinde der Gewindestange 22 zusammenzuwirken, so dass eine Drehbewegung der Gewindestange 22 zu einer Translationsbewegung des Gewindeelements 24 führt. Die Gewindeachsen von Gewindestange 22 und Gewindeabschnitt 24.1 fallen im zusammengebauten Zustand zusammen. Die Gewindeschale ist halbseitig offen, so dass die beiden Teile beim Zusammenbau in radialer Richtung zusammengeführt werden können, was die Montage erleichtert und gleichzeitig einen einfachen Schutz vor einem Überdrehen bietet. Dieser Schutz ergibt sich dadurch, dass die halboffene Bauweise der Gewindeschale eine radiale Bewegung der Gewindeschale gegenüber der Gewindestange 22 erlaubt, was ein Überspringen der Gewindeschale von einem Gewindegang der Gewindestange 22 zu einem anderen Gewindegang der Gewindestange 22 erlaubt.

Das Gewindeelement 24 weist Gleitflächen 38 auf, die sich parallel zur Längserstreckung der Gewindestange 22 erstrecken. Der Verstellschlitten 28 weist Führungsflächen 28.1 auf, die im zusammengebauten Zustand parallel zu den Gleitflächen 38 liegen und zusammen mit den Gleitflächen 38 ein Translationsgleitlager bilden, das eine Verschiebung von Gewindeelement 24 und Verstellschlitten 28 relativ zueiander führt und lagert. In der in Bezug auf die Drehachse der Gewindestange radialen Richtung umfasst eine U-förmige Überdrehschutzfeder als Überdrehsicherungsbauteil 36 im zusammengebauten Zustand die Gewindestange 22 und das Gewindeelement 24 und ist in eine Haltestruktur des Verstellschlittens 28 eingerastet. Dabei befindet sich das Gewindeelement 24 in radialer Richtung zwischen der Gewindestange 22 und dem Verstellschlitten 28, und die Gewindestange 22 befindet sich zwischen einem geschlossenen Ende der U-förmigen Überdrehschutzfeder und dem Gewindeelement 24. Ein offenes Ende der U-förmigen Überdrehschutzfeder ist mit dem Verstellschlitten 28 verrastet.

Der Metallverbundstreifen 26 weist eine Länge, eine Breite und eine Dicke auf, wobei die Länge insbesondere größer als die Dicke (Materialstärke) ist. Die Länge beträgt zum Beispiel 15 mm bis 25 mm bei einer Dicke von 0,6 mm bis 1 mm. Die Dicke und die Länge sind Designparameter, mit denen sich die Weite (Amplitude) der temperaturbedingten Stellbewegung einstellen lässt. Die Breite ist ein Designparameter, mit dem sich die Steifigkeit des Metallverbundstreifens 26 bei konstanter Temperatur vorgeben lässt.

Der Metallverbundstreifen 26 ist mit seiner Länge quer zu der Stellbewegung des Gewindeelements angeordnet und weist zwei in seiner Längsrichtung einander gegenüberliegende zweite Bereiche 26.1, 26.2 auf, die quer zu der Gewindestange 22 über das Gewindeelement 24 hinausragen. Ein zwischen den beiden zweiten Bereichen 26.1, 26.2 liegender erster Bereich 26.3 des Metallverbundstreifens 26 dient zur Koppelung des Metallverbundstreifens 26 mit dem Gewindeelement 24. Das Gewindeelement 24 weist dazu eine Nut 24.2 auf, in die der mittlere Bereich 26.3 des Metallverbundstreifens 26 eingelegt wird. Die Nut 24.2 verläuft quer zu der Richtung der Längserstreckung der Gewindestange 22. Die einander gegenüberliegenden zweiten Bereiche 26.1, 26.2 des Metallverbundstreifens 26 sind an dem Verstellschlitten 28 befestigt. Der Verstellschlitten 28 weist dazu Aufnahmen 40 auf, die durch ihre Form, Größe und Anordnung dazu eingerichtet sind, die zweiten Bereiche 26.1, 26.2 des Metallverbundstreifens 26 aufzunehmen.

Die beiden einander gegenüberliegenden zweiten Bereiche 26.1, 26.2 des Metallverbundstreifens 26 sind in die gleiche Richtung umgebogen. Die Umbiegung erfolgt zum Beispiel so, dass die umgebogenen zweiten Bereiche 26.1, 26.2 in die Richtung zeigen, in die sich der erste Bereich 26.3 des Metallverbundstreifens 26 bei einer Temperaturänderung bewegt. Die Aufnahmen 40 in dem Verstellschlitten sind bevorzugt so ausgeführt, dass sie eine Montage des Metallverbundstreifens 26 in zwei Anordnungen erlauben, wobei sich die erste Anordnung dadurch auszeichnet, dass die zweiten Bereiche 26.1, 26.2 des Metallverbundstreifens 26 in eine erste Richtung weisen, und dass sich die zweite Anordnung dadurch auszeichnet, dass die zweiten Bereiche 26.1, 26.2 des Metallverbundstreifens 26 in eine zur ersten Richtung entgegengesetzte zweite Richtung zeigen. Je nach Einbaulage erfolgt die temperaturänderungsbedingte Stellbewegung dann entweder in die erste Richtung oder in die zweite Richtung.

Dabei hat sich gezeigt, dass bei einer Dicke des Metallverbundelements 26 von 0,8 mm und einer wirksamen Länge (wirksame Länge gleich Abstand der umgebogenen zweiten Bereiche 26.1, 26.2 voneinander) von 19,8 mm gezielte Längenänderungen der kinematischen Kette von 0,2 mm bei einer Temperaturänderung von -40°C bis +80°C erreicht werden.

Der Metallverbundstreifen 26 ist mittels der Nut 24.2 an dem Gewindeelement 24 befestigt. Die Befestigung erfolgt bevorzugt durch einen Formschluss so, dass sich eine translatorische Bewegung des Gewindeelements 24 in eine gleich große translatorische Bewegung des Metallverbundstreifens 26 überträgt. Dabei übertragen die Wände der Nut 24.2 die zwischen dem Gewindeelement 24 und dem ersten Bereich 26.3 auftretende Stellkraft. Als Folge ist der Verstellschlitten 28 translatorisch in Richtung der Stellbewegung über den Metallverbundstreifen 26 mit dem Gewindeelement 24 gekoppelt, so dass sich eine translatorische Bewegung des Gewindeelements 24 über den Metallverbundstreifen 26 in eine translatorische Bewegung des Verstellschlittens 28 überträgt.

Diese Schwenkstellung und damit die Höhe der Hell-Dunkel-Grenze der abgestrahlten Lichtverteilung ist mittels einer Einstellvorrichtung einstellbar.

Bei konstanter Temperatur ist die Form des temperaturabhängig seine Form verändernden Metallverbundstreifens 26 konstant. In diesem Fall kann die Stellung desjenigen Teils des Verstellschlittens 28, an welches das Lichtmodul 16 angekoppelt ist, durch Drehen der Gewindestange 22 verändert werden. Damit ist die die Lage der Hell-Dunkel-Grenze verstellbar, insbesondere manuell einstellbar.

Durch eine temperaturabhängige Formänderung ändert sich die Position der zweiten Bereiche 26.1 und 26.2 des temperaturabhängig seine Form ändernden Metallverbundstreifens 26. Die Positionsänderung überträgt sich auf die übrigen, in der kinematischen Kette auf die zweiten Bereiche 26.1 und 26. 2 folgenden Kettenglieder der kinematischen Kette. Diese Kettenglieder sind im dargestellten Ausführungsbeispiel der Verstellschlitten 28, das Koppelgestänge 30 und letztlich das Lichtmodul 16.

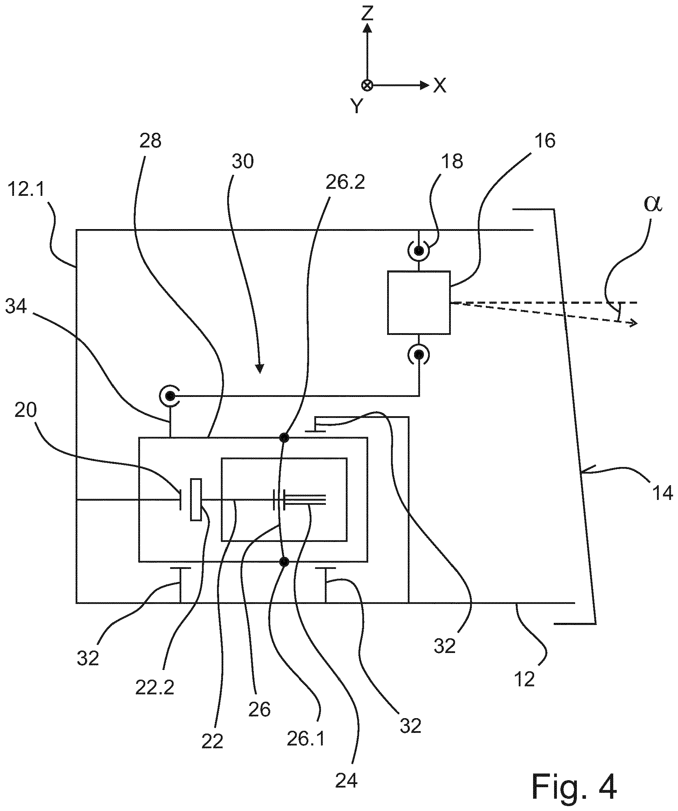

Figur 4 zeigt ein weiteres Ausführungsbeispiel der Erfindung. Dieses Ausführungsbeispiel unterscheidet sich von dem Ausführungsbeispiel durch einen elektrischen Drehantrieb der Gewindestange 22. Der elektrische Drehantrieb erfolgt durch einen bspw. als Schrittmotor verwirklichten Elektromotor 22.2, der die Gewindestange 22 entweder direkt oder über ein Getriebe rotatorisch antreibt. Auf diese Weise ist eine automatisch erfolgende Verstellung der Leuchtweite für eine Leuchtweitenregelung realisierbar.

## Patentansprüche

1. Kraftfahrzeugscheinwerfer (10) mit einem Gehäuse (12), einem in dem Gehäuse (12) schwenkbar angeordneten Lichtmodul (16), wobei das Lichtmodul (16) und das Gehäuse (12) Teile einer geschlossenen kinematischen Kette sind, welche die Schwenkposition determiniert, wobei ein temperaturabhängig seine Form änderndes Stellelement in der kinematischen Kette so angeordnet ist, dass es in der kinematischen Kette eine temperaturabhängige Stellbewegung ausführt, die eine temperaturabhängige Längenänderung der übrigen kinematischen Kette zumindest zu einem Teil kompensiert, **dadurch gekennzeichnet, dass** das temperaturabhängig seine Form ändernde Stellelement ein Metallverbundstreifen (26) aus zwei oder mehr Lagen Metall mit unterschiedlichen Temperaturausdehnungskoeffizienten ist, wobei der Metallverbundstreifen (26) mit seiner Länge quer zu der Stellbewegung angeordnet ist, und wobei der Metallverbundstreifen (26) wenigstens zwei quer zu der Stellbewegung voneinander beabstandete Bereiche (26.1, 26.3; 26.2, 26.3) aufweist, von denen ein erster Bereich (26.3) in einem gehäuseseitigen Abschnitt der kinematischen Kette fest gehalten wird und von denen wenigstens ein zweiter Bereich (26.1, 26.2) in einem lichtmodulseitigen Abschnitt der kinematischen Kette festgehalten wird.

2. Kraftfahrzeugscheinwerfer (10) nach Anspruch 1, **dadurch gekennzeichnet, dass** der Metallverbundstreifen (26) eine Länge, eine Breite und eine Dicke aufweist, wobei die Länge größer als die Dicke ist und dass der Metallverbundstreifen (26) so angeordnet ist, dass die Stellbewegung in Richtung der Dicke erfolgt.

3. Kraftfahrzeugscheinwerfer (10) nach einem der vorhergehenden Ansprüche, **dadurch gekennzeichnet, dass** die kinematische Kette das Lichtmodul (16), ein Gelenk (18), einen zwischen dem Gelenk (18) und einem Fixpunkt (20) des Gehäuses (16) liegenden Gehäuseabschnitt (12.1), eine Gewindestange (22), ein auf der Gewindestange (22) um deren Achse herum drehbares und mit der Drehung längs der Achse translatorisch verschiebbares Gewindeelement (24), den Metallverbundstreifen (26), einen im Gehäuse (12) translatorisch verschiebbaren Verstellschlitten (28) und ein Koppelgestänge (30) aufweist.

4. Kraftfahrzeugscheinwerfer (10) nach Anspruch 3, **dadurch gekennzeichnet, dass** der Fixpunkt (20) durch einen Teil des Gehäuses (12) oder durch eine starr mit dem Gehäuse (12) verbundene Struktur gebildet ist.

5. Kraftfahrzeugscheinwerfer (10) nach Anspruch 3 oder 4, **dadurch gekennzeichnet, dass** der Verstellschlitten (28) im Gehäuse (12) translatorisch beweglich gelagert ist.

6. Kraftfahrzeugscheinwerfer (10) nach einem der Ansprüche 3 bis 5, **dadurch gekennzeichnet, dass** der Verstellschlitten (28) eine Lichtmodulanbindungsstruktur (34) aufweist und dass das Koppelgestänge (30) mit einem Ende an das Lichtmodul (16) und mit einem anderen Ende an die Lichtmodulanbindungsstruktur (34) beweglich angekoppelt ist.

7. Kraftfahrzeugscheinwerfer (10) nach einem der vorhergehenden Ansprüche, **dadurch gekennzeichnet, dass** der Metallverbundstreifen (26) eine Länge, eine Breite und eine Dicke aufweist, wobei die Länge insbesondere größer als die Dicke ist.

8. Kraftfahrzeugscheinwerfer (10) nach Anspruch 7, **dadurch gekennzeichnet, dass** die Länge 15 mm bis 25 mm bei einer Dicke von 0,6 mm bis 1 mm beträgt.

9. Kraftfahrzeugscheinwerfer (10) nach einem der Ansprüche 3 bis 6, **dadurch gekennzeichnet, dass** der Metallverbundstreifen (26) mit seiner Länge quer zu der Stellbewegung des Gewindeelements (24) angeordnet ist und zwei in seiner Längsrichtung einander gegenüberliegende zweite Bereiche (26.1, 26.2) aufweist, die quer zu der Gewindestange (22) über das Gewindeelement (24) hinausragen.

10. Kraftfahrzeugscheinwerfer (10) nach Anspruch 9, **dadurch gekennzeichnet, dass** der erste Bereich (26.3) als ein zwischen den beiden zweiten Bereichen (26.1, 26.2) liegender mittlerer Bereich (26.3) des Metallverbundstreifens (26) zur Koppelung des Metallverbundstreifens (26) mit dem Gewindeelement (24) eingerichtet ist.

11. Kraftfahrzeugscheinwerfer (10) nach Anspruch 10, **dadurch gekennzeichnet, dass** das Gewindeelement (24) eine Nut (24.2) aufweist, in die der mittlere Bereich (26.3) des Metallverbundstreifens (26) eingelegt ist, und welche Nut (24.2) quer zu der Richtung der Längserstreckung der Gewindestange (22) verläuft.

12. Kraftfahrzeugscheinwerfer (10) nach einem der Ansprüche 9 bis 11, **dadurch gekennzeichnet, dass** die einander gegenüberliegenden zweiten Bereiche (26.1, 26.2) an dem Verstellschlitten (28) befestigt sind und dass der Verstellschlitten (28) dazu Aufnahmen aufweist, die durch ihre Form, Größe und Anordnung dazu eingerichtet sind, die zweiten Bereiche (26.1, 26.2) des Metallverbundstreifens (26) formschlüssig aufzunehmen.

13. Kraftfahrzeugscheinwerfer (10) nach einem der Ansprüche 9 bis 12, **dadurch gekennzeichnet, dass** die beiden einander gegenüberliegenden zweiten Bereiche (26.1, 26.2) des Metallverbundstreifens in die gleiche Richtung umgebogen sind.

14. Kraftfahrzeugscheinwerfer (10) nach Anspruch 13, **dadurch gekennzeichnet, dass** der erste Bereich (26.3) des Metallverbundstreifens (26) zwischen den beiden zweiten Bereichen (26.1, 26.2) liegt und zur Koppelung des Metallverbundstreifens (26) mit dem Gewindeelement (24) dient und dass die einander gegenüberliegenden zweiten Bereiche (26.1, 26.2) an dem Verstellschlitten (28) befestigt sind.

15. Kraftfahrzeugscheinwerfer nach einem der vorhergehenden Ansprüche, **dadurch gekennzeichnet, dass** der Metallverbundstreifen elektrisch beheizbar ist.

## Claims

1. Motor vehicle headlight (10) comprising a housing (12) and a light module (16) pivotably arranged in the housing (12), the light module (16) and the housing (12) being parts of a closed kinematic chain which determines the pivot position, an adjusting element which changes its shape depending on the temperature being arranged in the kinematic chain in such a way that it performs a temperature-dependent adjustment movement in the kinematic chain that compensates for a temperature-dependent change in length of the rest of the kinematic chain at least in part, **characterized in that** the adjusting element which changes its shape depending on the temperature is a metal composite strip (26) consisting of two or more layers of metal having different thermal expansion coefficients, the metal composite strip (26) being arranged such that its length is transverse to the adjustment movement, and the metal composite strip (26) having at least two regions (26.1, 26.3; 26.2, 26.3) which are spaced apart from one another transversely to the adjustment movement, of which a first region (26.3) is fixedly held in a housing-side portion of the kinematic chain and of which at least one second region (26.1, 26.2) is held in a light-module-side portion of the kinematic chain.

2. Motor vehicle headlight (10) according to claim 1, **characterized in that** the metal composite strip (26) has a length, a width and a thickness, the length being greater than the thickness, and **in that** the metal composite strip (26) is arranged such that the adjustment movement takes place in the direction of the thickness.

3. Motor vehicle headlight (10) according to any of the preceding claims, **characterized in that** the kinematic chain comprises the light module (16), a joint (18), a housing portion (12.1) located between the joint (18) and a fixed point (20) of the housing (16), a threaded rod (22), a threaded element (24) on the threaded rod (22) which is rotatable about the axis of the threaded rod and is translationally displaceable along the axis with the rotation, the metal composite strip (26), an adjustment slide (28) which is translationally displaceable in the housing (12), and a coupling linkage (30).

4. Motor vehicle headlight (10) according to claim 3, **characterized in that** the fixed point (20) is formed by a part of the housing (12) or by a structure rigidly connected to the housing (12).

5. Motor vehicle headlight (10) according to claim 3 or claim 4, **characterized in that** the adjustment slide (28) is translationally movably mounted in the housing (12) .

6. Motor vehicle headlight (10) according to any of claims 3 to 5, **characterized in that** the adjustment slide (28) has a light module connection structure (34) and **in that** the coupling linkage (30) is coupled to the light module (16) at one end and to the light module connection structure (34) at another end.

7. Motor vehicle headlight (10) according to any of the preceding claims, **characterized in that** the metal composite strip (26) has a length, a width and a thickness, the length being in particular greater than the thickness.

8. Motor vehicle headlight (10) according to claim 7, **characterized in that** the length is 15 mm to 25 mm with a thickness of 0.6 mm to 1 mm.

9. Motor vehicle headlight (10) according to any of claims 3 to 6, **characterized in that** the metal composite strip (26) is arranged such that its length is transverse to the adjustment movement of the threaded element (24) and said metal composite strip has two second regions (26.1, 26.2) which are opposite one another in its longitudinal direction and which protrude beyond the threaded element (24) transversely to the threaded rod (22) .

10. Motor vehicle headlight (10) according to claim 9, **characterized in that** the first region (26.3) is designed as a middle region (26.3), located between the two second regions (26.1, 26.2), of the metal composite strip (26) for coupling the metal composite strip (26) to the threaded element (24).

11. Motor vehicle headlight (10) according to claim 10, **characterized in that** the threaded element (24) has a groove (24.2) into which the middle region (26.3) of the metal composite strip (26) is inserted, and which groove (24.2) extends transversely to the direction of the longitudinal extension of the threaded rod (22).

12. Motor vehicle headlight (10) according to any of claims 9 to 11, **characterized in that** the opposing second regions (26.1, 26.2) are fastened to the adjustment slide (28) and **in that** the adjustment slide (28) has receptacles for this purpose, which are configured by their shape, size and arrangement to accommodate the second regions (26.1, 26.2) of the metal composite strip (26) in a form-fitting manner.

13. Motor vehicle headlight (10) according to any of claims 9 to 12, **characterized in that** the two opposing second regions (26.1, 26.2) of the metal composite strip are bent in the same direction.

14. Motor vehicle headlight (10) according to claim 13, **characterized in that** the first region (26.3) of the metal composite strip (26) is located between the two second regions (26.1, 26.2) and is used to couple the metal composite strip (26) to the threaded element (24), and **in that** the opposing second regions (26.1, 26.2) are fastened to the adjustment slide (28).

15. Motor vehicle headlight according to any of the preceding claims, **characterized in that** the metal composite strip is electrically heatable.

## Revendications

1. Phare de véhicule automobile (10) comprenant un boîtier (12), un module de lumière (16) disposé à pivotement dans le boîtier (12), dans lequel le module de lumière (16) et le boîtier (12) font partie d'une chaîne cinématique fermée qui détermine la position de pivotement, dans lequel un élément de réglage qui change de forme en fonction de la température est disposé dans la chaîne cinématique de telle manière qu'il exerce, dans la chaîne cinématique, un mouvement de réglage dépendant de la température, qui compense au moins en partie un changement de longueur dépendant de la température, de la chaîne cinématique restante, **caractérisé par le fait que** ledit élément de réglage qui change de forme en fonction de la température est un ruban composite métallique (26) constitué de deux ou plusieurs couches de métal ayant des coefficients de dilatation thermique différents, dans lequel la longueur du ruban composite métallique (26) est disposée transversalement au mouvement de réglage, et dans lequel le ruban composite métallique (26) comprend au moins deux zones (26.1, 26,3; 26.2, 26.3) espacées les unes des autres transversalement au mouvement de réglage, dont une première zone (26.3) est retenue dans un tronçon côté boîtier de la chaîne cinématique et dont au moins une deuxième zone (26.1, 26.2) est retenue dans un tronçon côté module de lumière de la chaîne cinématique.

2. Phare de véhicule automobile (10) selon la revendication 1, **caractérisé par le fait que** le ruban composite métallique (26) présente une longueur, une largeur et une épaisseur, dans lequel la longueur est supérieure à l'épaisseur et que le ruban composite métallique (26) est disposé de telle sorte que le mouvement de réglage s'effectue dans le sens de l'épaisseur.

3. Phare de véhicule automobile (10) selon l'une quelconque des revendications précédentes, **caractérisé par le fait que** la chaîne cinématique comprend le module de lumière (16), une articulation (18), un tronçon de boîtier (12.1) situé entre l'articulation (18) et un point fixe (20) du boîtier (16), une tige filetée (22), un élément fileté (24) qui peut tourner sur ladite tige filetée (22) autour de l'axe de celle-ci et peut être déplacé en translation le long de l'axe avec la rotation, ledit ruban composite métallique (26), un chariot de réglage (28) qui peut être déplacé en translation dans le boîtier (12) ains qu'une tringlerie d'accouplement (30).

4. Phare de véhicule automobile (10) selon la revendication 3, **caractérisé par le fait que** le point fixe (20) est formé par une partie du boîtier (12) ou par une structure reliée de manière rigide au boîtier (12) .

5. Phare de véhicule automobile (10) selon la revendication 3 ou 4, **caractérisé par le fait que** le chariot de réglage (28) est monté dans le boîtier (12) de manière à pouvoir être déplacé en translation.

6. Phare de véhicule automobile (10) selon l'une quelconque des revendications 3 à 5, **caractérisé par le fait que** le chariot de réglage (28) présente une structure de connexion de module de lumière (34) et que ladite tringlerie d'accouplement (30) est couplée de manière mobile par une extrémité au module de lumière (16) et par une autre extrémité à la structure de connexion de module de lumière (34).

7. Phare de véhicule automobile (10) selon l'une quelconque des revendications précédentes, **caractérisé par le fait que** le ruban composite métallique (26) présente une longueur, une largeur et une épaisseur, dans lequel la longueur est en particulier supérieure à l'épaisseur.

8. Phare de véhicule automobile (10) selon la revendication 7, **caractérisé par le fait que** la longueur est comprise entre 15 mm et 25 mm avec une épaisseur comprise entre 0,6 mm et 1 mm.

9. Phare de véhicule automobile (10) selon l'une quelconque des revendications 3 à 6, **caractérisé par le fait que** la longueur du ruban composite métallique (26) est disposée transversalement au mouvement de réglage de l'élément fileté (24) et présente deux deuxièmes zones (26.1, 26.2) qui se font face dans sa direction longitudinale et qui font saillie transversalement à la tige filetée (22) au-delà de l'élément fileté (24).

10. Phare de véhicule automobile (10) selon la revendication 9, **caractérisé par le fait que** la première zone (26.3) est conçue en tant que zone médiane (26.3) du ruban composite métallique (26) située entre les deux deuxièmes zones (26.1, 26.2) et destinée à coupler le ruban composite métallique (26) à l'élément fileté (24).

11. Phare de véhicule automobile (10) selon la revendication 10, **caractérisé par le fait que** l'élément fileté (24) présente une rainure (24.2) dans laquelle s'insère la zone médiane (26.3) du ruban composite métallique (26), et laquelle rainure (26.2) s'étend transversalement à la direction de l'extension longitudinale de la tige filetée (22).

12. Phare de véhicule automobile (10) selon l'une quelconque des revendications 9 à 11, **caractérisé par le fait que** les deuxièmes zones (26.1, 26.2) qui se font face sont fixées au chariot de réglage (28) et que le chariot de réglage (28) comprend des logements à cette fin, qui, par leur forme, leur taille et leur agencement, sont conçus pour recevoir à engagement positif les deuxièmes zones (26.1, 26.2) du ruban composite métallique (26).

13. Phare de véhicule automobile (10) selon l'une quelconque des revendications 9 à 12, **caractérisé par le fait que** les deux deuxièmes zones (26.1, 26.2) opposées du ruban composite métallique sont repliées dans le même sens.

14. Phare de véhicule automobile (10) selon la revendication 13, **caractérisé par le fait que** la première zone (26.3) du ruban composite métallique (26) est située entre les deux deuxièmes zones (26.1, 26.2) et sert à coupler le ruban composite métallique (26) à l'élément fileté (24) et que les deuxièmes zones (26.1, 26.2) qui se font face sont fixées au chariot de réglage (28).

15. Phare de véhicule automobile selon l'une quelconque des revendications précédentes, **caractérisé par le fait que** le ruban composite métallique peut être chauffé électriquement.
